(19) Europäisches Patentamt
European Patent Office
Office européen des brevets

(11) Veröffentlichungsnummer: **0 047 429**
**A1**

(12) **EUROPÄISCHE PATENTANMELDUNG**

(21) Anmeldenummer: **81106611.7**

(51) Int. Cl.³: **C 09 B 19/00**

(22) Anmeldetag: **26.08.81**

(30) Priorität: **05.09.80 DE 3033439**

(43) Veröffentlichungstag der Anmeldung: **17.03.82**
**Patentblatt 82/11**

(84) Benannte Vertragsstaaten: **CH DE FR GB IT LI**

(71) Anmelder: **BASF Aktiengesellschaft,**
**Carl-Bosch-Strasse 38, D-6700 Ludwigshafen (DE)**

(72) Erfinder: **Mayer, Udo, Dr. Chem.,**
**Max-Slevogt-Strasse 27, D-6710 Frankenthal (DE)**

(54) **Basische Farbstoffe der Oxazinreihe.**

(57) Die Erfindung betrifft Verbindungen der allgemeinen Formel I

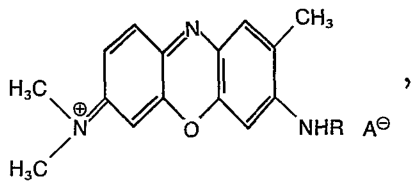

in der

R Methyl oder Äthyl und
$A^{\ominus}$ ein Anion sind.

Die erfindungsgemäßen Verbindungen eignen sich zum Färben anionisch modifizierter Fasern.

EP 0 047 429 A1

## Basische Farbstoffe der Oxazinreihe

Die Erfindung betrifft Verbindungen der allgemeinen Formel I

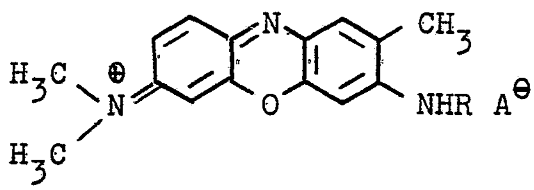

in der

R Methyl oder Äthyl und

$A^{\ominus}$ ein Anion sind.

Als Anionen $A^{\ominus}$ kommen organische und anorganische sowie komplexe Anionen in Betracht. Im einzelnen seien beispielsweise Chlorid, Bromid, Nitrat, Sulfat, Hydrogensulfat, Carbonat, Methosulfat, Formiat, Acetat, Tetrachlorozinkat, Oxalat, Toluolsulfonat oder Tartrat genannt.

Zur Herstellung der Verbindungen der Formel I eignet sich insbesondere das in der DE-PS 2 206 508 beschriebene Verfahren.

Die bei der Synthese erhaltenen Anionen können nach bekannten Verfahren gegen gewünschte Anionen ausgetauscht werden.

Die neuen Farbstoffe haben einen neutral blauen Farbton und eignen sich insbesondere zum Färben von anionisch modifizierten Fasern, wie Polyamiden, Polyestern und vorzugsweise Acrylnitrilpolymerisaten. Die Farbstoffe ergeben aufgrund ihres guten Migrationsvermögens egale Färbungen mit guten Licht- und Naßechtheiten.

Beispiel

21,6 g 4-Nitroso-3-methoxy-N,N-dimethylanilin-hydrochlorid werden in einer Stunde in eine 80°C warme Mischung von 15,1 g 3-Äthylamino-4-methyl-phenol, 20 g Zinkchlorid, 4 g Zinkoxid und 100 ml Methylglykol eingetragen. Man hält noch 2 Stunden bei 80°C und saugt dann das kristallin ausgefallene Farbsalz ab. Es wiegt 39 g und gibt auf Polyacrylnitrilfasern leuchtend blaue Färbungen.

Unter den gleichen Reaktionsbedingungen erhält man aus 21,6 g 4-Nitroso-3-methoxy-dimethylanilin-hydrochlorid und 13,7 g 3-Methylamino-4-methyl-phenol 36 g eines Farbstoffs, der ähnliche färberische Eigenschaften hat.

Patentansprüche

1. Basische Farbstoffe der Oxazinreihe der allgemeinen Formel I

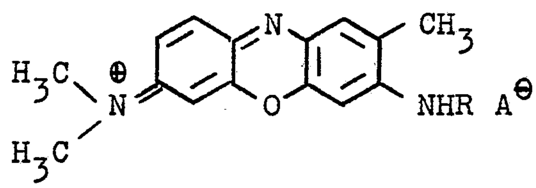

in der

R Methyl oder Äthyl und

$A^{\ominus}$ ein Anion sind.

2. Verwendung der Farbstoffe gemäß Anspruch 1 zum Färben von anionisch modifizierten Fasern.

Europäisches Patentamt

**EUROPÄISCHER RECHERCHENBERICHT**

0047429

Nummer der Anmeldung

EP 81 10 6611

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - C - 81 242 (A. LEONHARDT)<br>* Seite 2, Tabelle, Beispiele 1, 3 *<br>-- | 1 |
| | DE - C - 87 901 (FARBWERK MUHLHEIM)<br>* Insgesamt *<br>-- | 1 |
| | GB - A - 1 190 235 (HOECHST)<br>* Seite 1, Formel 1 *<br>& DE - A - 1 569 603<br>-- | 1,2 |
| | FR - A - 2 317 336 (CIBA-GEIGY)<br>* Seite 3, Zeilen 28-37 *<br>-- | 1,2 |
| A | DE - C - 62 367 (A. LEONHARDT) | |
| A | DE - C - 82 233 (A. LEONHARDT) | |
| A | DE - C - 75 018 (A. LEONHARDT) | |
| A | DE - C - 74 690 (A. LEONHARDT) | |
| A | DE - A - 1 925 052 (HOECHST) | |
| A | FR - A - 2 357 603 (BAYER)<br>& DE - A - 2 631 166 | |
| A | FR - A - 2 294 209 (HOECHST)<br>& DE - A - 2 458 347 | |
| A<br>D | FR - A - 2 171 260 (BASF)<br>& DE - A - 2 206 508<br>---- | |

KLASSIFIKATION DER ANMELDUNG (Int. Cl.³)

C 09 B 19/00

RECHERCHIERTE SACHGEBIETE (Int. Cl.³)

C 09 B 19/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 09-12-1981 | DAUKSCH |